# EUROPÄISCHE PATENTSCHRIFT

(11) **EP 1 352 780 B1**
(45) Veröffentlichungstag und Bekanntmachung des Hinweises auf die Patenterteilung: **03.08.2005**
(21) Anmeldenummer: 03000972.4
(22) Anmeldetag: 17.01.2003
(51) Int. Cl.: B60N 2/56, A47C 7/74

(54) **Klimatisierte beziehungsweise belüftete Sitz-/Liege-Vorrichtung für Fahrzeuge oder Möbel**
Air conditioned respectively ventilated seat/couch device for vehicle or furniture
Dispositif siège/couchette climatisé respectivement ventilé pour véhicule ou meuble

(30) Priorität: 09.04.2002 DE 20205426 U; 12.10.2002 DE 10247671; 27.12.2002 DE 10261268
(43) Veröffentlichungstag der Anmeldung: 15.10.2003
(73) Patentinhaber: Pfeil, Gerhard, 76275 Ettlingen (DE)
(72) Erfinder: Pfeil, Gerhard, 76275 Ettlingen (DE)
(74) Vertreter: Hellmayr, Wolfgang, Dr. rer. nat.

(56) Entgegenhaltungen:
- WO-A-98/55340
- DE-A- 4 135 364
- DE-A- 19 830 797
- DE-A- 19 927 232
- DE-C- 19 847 384
- US-A- 4 853 992
- US-A- 5 833 321

## Beschreibung

Die Erfindung betrifft klimatisierte bezw. belüftete Sitz-/Liege-Vorrichtungen für Fahrzeuge oder Möbel, wie belüftete Sitz- oder Liegemöbel, z. B. Fahrzeugsitze oder Sessel, Liegen oder Betten u.s.w., bestehend aus einem unteren Teil bezw. Sitzteil und einem oberen Teil bezw. Rückenlehnenteil oder Kopfteil, gegebenenfalls (gegfls.) Armstützen und gegfls. einem Luftzufuhr- und/oder Enlüftungssystem

Belüftungs- Heiz- und Kühlanlagen, hier zusammengefaßt als "Klimaanlagen" bezeichnet, sind in Verkehrsmitteln, wie Omnibussen, Lastwagen, vier-, drei- und zweirädrigen Personenfahrzeugen, Schienenfahrzeugen, wie Eisenbahnen, Luftfahrzeugen, wie turbinen- und propellerangetriebenen Passagierflugzeugen, Transportflugzeugen oder Hubschraubern, Wasserfahrzeugen, wie Kreuzfahrtschiffen, Luftkissenfahrzeugen, Aufzügen, Bergbahnen u.s.w. bekannt. In einigen wenigen Personenkraftfahrzeugtypen der oberen Preisklassen werden auf Wunsch neuerdings Klimaanlagen in den Sitzflächen und auch gegebenenfalls in den Rückenlehnen eingebaut. Dabei wird frische Luft, die je nach Jahreszeit gekühlt oder erhitzt sein kann, durch den Fahrzeugsessel und die Sitzfläche und/oder Rückenlehne oder auch durch auf den Sessel aufgezogene Netzauflagen oder Matten gegen den Automobilisten geblasen und/oder gestaute, feuchtwarme Luft mit Hilfe von Ventilatoren nach dem Fahrzeugboden hin entfernt. Solche Klimaanlagen sind beispielsweise in folgenden Druckschriften offenbart:
DE 199 27 232 A1 (D 1); DE 198 30 797 A1 (D 4); und US 58 33 321 (D 7).
DE 199 10 390 A1 (D 2); DE 198 24 191 A1 (D 5);
DE 198 47 384 C1 (D 3); WO 98 55 340 A1 (D 6);

Nachteile dieser bekannten Klimaanlagen sind unter anderen das Ventilatorgeräusch, das, wenn mehrere Sitze klimatisiert werden sollen, natürlich noch störender auffällt, der höhere Stromverbrauch und der Umstand, daß der Einbau der Ventilatoren eine aufwendige Konstruktion und hochwertige, luftdurchlässige Materialien erforderlich macht und, allgemein gesagt, der Kostenfaktor, der es bisher verhindert hat, daß im Mittelklassen- und Kleinwagensektor Modelle auf den Markt gekommen sind, welche Klimaanlagen im Bereich der Rückenlehnen und der Sitzflächen serienmäßig aufweisen.

Es bestand also ein Bedarf an preisgünstigen, weitgehend wartungsfreien, belüfteten, d. h. klimatisierbaren Fahrzeugsesseln bezw. -sitzen, aber auch an belüftbaren, d. h. klimatisierbaren Sesseln bezw. Sitzen und Liegen, wie Betten, Couchen, Sofas, Bettsofas, Kanapees, Behinderten- und Krankenrollstühlen, für Büros, Campingzwecke, große Säle, Kinosäle, Diskotheken, Theater, Cafés, Hotels, Restaurants, Bars, überdachte Stadien, Krankenhäuser, Sanatorien, Arztpraxen, Altersheime, Schulen, Kindergärten, private Haushalte, Passagierschiffe, für die Möbelindustrie allgemein (einschließlich der Herstellung von Sitzbänken), also allgemein an klimatisierten bezw. belüfteten Sitz-/Liege-Vorrichtungen für Fahrzeuge oder Möbel. Es bestand auch ein Bedarf an solchen preisgünstigen, klimatisierten bezw. belüfteten Sitz-/Liege-Vorrichtungen für Fahrzeuge oder Möbel, bei denen im Bereich der Rückenlehnen und im Sitzbereich gegebenenfalls erwärmte oder gekühlte Luft vorzugsweise flächig ausgeblasen wird.

Die Aufgabe, die der vorliegenden Erfindung zugrunde lag, war also die Bereitstellung einer klimatisierten bezw. belüfteten Sitz-/Liege-Vorrichtungen für Fahrzeuge oder Möbel, und zwar Liege- oder Sitzmöbel, wobei die Klimatisierungswirkung insbesondere im Rücken- und/oder Sitzbereich eintreten und in einfacher Weise regulierbar sein sollte.

Eine weitere Aufgabe war die, besonders kostengünstige Ausführungsformen der Erfindung, insbesondere für die Kraftfahrzeugindustrie, bereitzustellen.

Diese und weitere Aufgaben werden durch die neue, erfindungsgemäße, klimatisierte bezw. belüftete Sitz-/Liege-Vorrichtung für Fahrzeuge oder Möbel gelöst.

Gegenstand der Erfindung ist nun eine klimatisierte bezw. belüftete Sitz-/Liege-Vorrichtung für Fahrzeuge oder Möbel, bestehend aus einem unteren Teil bezw. Sitzteil und einem oberen Teil bezw. Rückenlehnenteil und/oder Kopfteil, gegebenenfalls (gegfls.) Armstützen und gegfls. einem Luftzufuhr- und Enlüftungssystem, welche Vorrichtung dadurch gekennzeichnet ist, daß die zentralen Bereiche des unteren Teils bezw. Sitzteiles und des oberen Teils bezw. des Rückenlehnenteils und/oder Kopfteils aus Hohlräume aufweisenden Gitternetz-Polsterelementen 9 oder paarweise aus Gitternetzelementen 21 und Polsterelementen 19 bestehen, welche Gitternetz-Polsterelemente 9 bezw. Gitternetzelemente 21 und Polsterelemente 19 aus- und einbaubar sind und ihre Position vertauschen können, und daß gegfls. die Abstände zwischen den Gitternetzen 11 und den Polstern 12 der Gitternetz-Polsterelementen 9a bezw. die Abstände zwischen den Gitternetzen 21 a und den Polstern 22 in vorgegebener Weise verändert und eingestellt werden können (s. insbesondere Zeichnungsblätter 11 und 10).

Eine solche Abstandsänderung kann durch Verschieben der Polster 12 auf die Gitternetze 11 zu bezw. der Polster 22 auf die Gitternetze 21a zu und Verriegeln erfolgen.

Das neue klimatisierte bezw. belüftete Sitz-/Liege-Vorrichtung für Fahrzeuge oder Möbel kann ein Sitz, z. B. ein Fahrzeugsessel, oder z. B. eine Liege (Couch) sein.

Die Gitternetz-Polsterelemente 9 und 9a bezw. Gitternetzelemente 21, Polsterelemente 19, Gitternetze 21 a und/oder Polster 22 können im eingebauten Zustand bei Bedarf an ein Luftzufuhr- und Entlüftungssystem angeschlossen werden.

Auch ist es gegebenenfalls möglich, mit nur einer der oben genannten Belüftungsausführungen nur im Sitz bezw. nur in der Rückenlehne auszukommen.

Gemäß einer bevorzugten Ausführungsform der Erfindung ist das bezw. mindestens eines der Gitternetze 21a (vgl. Zeicnungsblatt 10) mit der klimatisierten bezw. belüfteten Sitz-/Liege-Vorrichtung für Fahrzeuge oder Möbel dauerhaft verbunden. Eine solche dauerhafte Verbindung kann durch Nähen, Kleben, Verschweißen, Knöpfen (mittels Druckknöpfen), Verklammern und/oder Klettverschließen und ähnliches bewerkstelligt werden.

Die Gitternetze 11 bezw. die Gitternetze 21a der Vorrichtung gemäß der Erfindung können mit einer luftdurchlässigen elektrischen Heizung ausgerüstet werden. Alle Polster 12 der Gitternetz-Polsterelemente 9 und 9a und alle Polster 22 oder einige oder nur eines können, wenn gewünscht, ebenfalls mit einer elektrischen Heizung ausgestattet werden.

Unter "Sitz- oder Liegemöbel" werden im Zusammenhang mit der vorliegenden Erfindung allgemein Sitzvorrichtungen, wie Polstersessel, Sessel oder gepolsterte oder ungepolsterte Stühle mit oder ohne Armlehnen, Hocker oder Schemel (d. h. auch gepolsterte oder ungepolsterte Stühle mit oder ohne Armlehnen, aber ohne Rückenlehnen) oder auch entsprechende, aber breitere Sitzvorrichtungen für mehr als eine Person (d. h. Sitzbänke) bezw. Liegen, Betten, Bettsofas, Sofas, Couchen, Kanapees u.s.w. verstanden, wobei die vorgenannten und äquivalente belüfteten Liege- oder Sitzmöbel gegebenenfalls in andere Objekte, beispielsweise Landfahrzeuge, wie Personenkraftfahrzeuge oder Campingwagen, Wasserfahrzeuge, wie Passagierschiffe, Luftfahrzeuge, Veranstaltungs-, Theater-, Konzert- oder Sportsäle, Hallen u. s. w., fest oder herausnehmbar eingebaut sein können.

Insbesondere für den Fall, daß das belüftete Liege- oder Sitzmöbel ein Fahrzeugsessel ist, sind die Gitternetz-Polsterelemente 9 und 9a bezw. Gitternetzelemente 21, Polsterelemente 19, Gitternetze 21a, Polster 22, Rückwände 23 bezw. Sesselböden 43 im eingebauten Zustand gegfls. an ein Luftzufuhr- und Entlüftungssystem des Fahrzeugs angeschlossen.

Obwohl die im folgenden näher beschriebenen Hohlräume in den Gitternetz-Polsterelementen 9 und 9a bezw. Gitternetzelementen 21 und Polsterelementen 19, Gitternetzen 21a, Polstern 22, Rückwänden 23 bezw. Sesselböden 43 im allgemeinen für eine ausreichende Belüftung sorgen, kann diese klimatisierende Belüftung durch Anschluß an ein Luftzufuhr- und Entlüftungssystem zusätzlich verstärkt werden (Zwangsbelüftung).

Gemäß einer bevorzugten Ausführungsform der Erfindung sind die Gitternetz-Polsterelemente 9 aus Gitternetzen 11 und Polstern 12 aufgebaut, welche über einen zwischen ihnen liegenden Luftverteilerkasten 10 fest miteinander verbunden sind und.der sitzenden Person entweder zugewandt oder abgewandt sind.

Gemäß einer anderen bevorzugten Ausführungsform der Erfindung (Zeichnungsblätter 4, 5 und 6) sind die Gitternetzelemente 21 und die Polsterelemente 19 über einen zwischen ihnen liegenden Rahmen oder Anschlag 27 miteinander verbunden, wobei von dem Rahmen bezw. Anschlag und dem Gitternetzelement 21- und Polsterelement 19-Paar ein Luftschacht geformt wird, wenn das Gitternetzelement der sitzenden Person zugewandt ist, wobei aber das Gitternetzelement an dem Polsterelement anliegt und dieses stützt, wenn andererseits der sitzenden Person das Polsterelement zugewandt ist.

Die Gitternetzelement 21- und Polsterelement 19-Paare können dabei mit dem zwischen ihnen liegenden Rahmen bezw. Anschlag 27 verschraubt sein. Für denjenigen Fall, daß die gitterartige bezw. netzartige Seite dem Automobilisten zugewandt ist, definiert bei der zuletzt genannten Ausführungsform der Rahmen oder Anschlag 27 einen Luftschacht, welcher die gleiche Funktion ausübt wie der bei der zuerst genannten Ausführungsform beschriebene Luftverteilerkasten 10: Er verteilt die von der Belüftungs- bezw. Klimaanlage des Fahrzeugs über eine Schlauchleitung herangeführte Luft und führt sie von hinten an das Gitter bezw. Netz heran.

Für denjenigen Fall dagegen, daß das Polsterelement dem Automobilisten zugewandt ist, dient bei der zuletzt genannten Ausführungsform das Gitternetzelement der Stabilisierung des Polsters, indem es direkt an letzterem anliegt. Ein Hohlraum befindet sich dann zwischen dem Gitternetzelement und der Rückwand der Rückenlehne des Fahrzeugsitzes.

Gemäß einer anderen Ausbildungsform der Erfindung, die insbesondere für belüftete Sessel in der Möbelindustrie im Betracht kommt, aber auch für die Herstellung von besonders preiswerten, belüfteten Fahrzeugsesseln geeignet ist, bestehen der Sitzteil und der Rückenlehnenteil aus einem Rohr- oder Profilgestell 37 (Zeichnungsblätter 9 und 11) und die zentralen Bereiche des Sitzteiles und des Rückenlehnenteils aus Gitternetz-Polsterelementen 9 und 9a bezw. Gitternetzelementen 21 und Polsterelementen 19, welche Gitternetz-Polsterelementen 9 und 9a bezw. Gitternetzelemente 21 und Polsterelemente 19 aus- und einbaubar sind und ihre Position untereinander vertauschen können.

Bei der zuvor beschriebenen Ausführungsform des erfindungsgemäßen Sessels weisen die Gitternetz-Polsterelemente 9 und 9a bezw. Gitternetzelemente 21 und Polsterelemente 19 vorzugsweise innenliegende 41 und/oder außenliegende 42 Befestigungs-Steckrohre bezw. Befestigungs-Steckprofile auf.

Andere Befestigungssysteme als die Befestigungs-Steckrohre bezw. Befestigungs-Steckprofile für die Besfestigung der Gitternetz-Polsterelemente 9 und 9a bezw. Gitternetzelemente 21 und Polsterelemente 19 an dem Rohr- oder Profilgestell 37 sind beispielsweise Klappverschlüsse, Federklammern und Klemmverschlüsse. Auf solche Befestigungssysteme wird man zweckmäßigerweise insbesondere dann zurückgreifen, wenn aus Platzgründen das Umrüsten der Rückenlehnen durch Aufstecken von beispielsweise Gitternetz-Polsterelementen 9 schlecht möglich ist, wie etwa in kleineren Kraftfahrzeugen (keine Raumfreiheit zum Wagenhimmel).

Das verschiebbare Gitternetz-Polsterelement 9a (s. Fig. D und F auf Zeichnungsblatt 11) kann, wenn gewünscht, auch fest mit dem Rohrgestell verschraubt werden. Bei allen erfindungsgemäßen Ausführungsformen können eine Rückenlehnenverstellung 40, die den Winkel zwischen Rückenlehne und Sitzteil einzustellen erlaubt, und/oder eine oder mehrere Nackenstützen vorgesehen sein

Die Erfindung wird nachfolgend anhand der beigeschlossenen 11 Zeichnungsblätter (ZB) weiter erläutert, auf denen bedeuten
1 einen Fahrzeugsessel (bezw. -sitz) mit der Rückenlehne 1a und dem Sitz 1b (s. beispielsweise ZB 1, 4, 7 und 10)
2 die Füsse (oder Kufen) des Fahzeugsessels (s. ZB 1 bis 8 und 10),
3 den Rahmen des Fahrzeugsessels (s. ZB 1, 2, 7 und 8),
4 die Nackenstütze (s. ZB 1, 4, 7, 9 und 10),
5 einen Luftzufuhrschlauch (s. ZB 1, 4, 9 und 10), der in
6 einen Luftschacht (s. ZB 1 bis 3) mündet, der
7 und 7a mehrere Düsen aufweist (s. ZB 1 bis 3),
8 ein Regelventil (s. ZB 1, 4, 9 und 10),
9 ein Gitternetz-Polsterelement (s. ZB 1 bis 3 und 7 bis 9),
9a verschiebbares Gitternetz-Polsterelement (s. ZB 11),
10 einen Luftverteilerkasten (s. ZB 1, 3, 7 bis 9 und 11),
11 ein Gitternetz (s. ZB 1, 7, 9 und 11),
11a Schlangenfedern, ein selbsttragendes Gitter oder eine Sitzschale (s. ZB 1,7 und 9)
12 ein Polster (s. ZB 1, 3, 7 bis 9 und 11),
13 Befestigungsvorrichtungen für ein Gitternetz- und Polsterelement-Paar 9 (s. ZB 1 und 7),
13a Spannbänder für das Gitternetz 11 (s. ZB 1, 7, 9 und 11),
14 Aussparungen in der Rückwand der Rückenlehne 1a für die Befestigungsvorrichtungen 13 (s. ZB 1 und 7),
15 Entlüftungsschächte (s. ZB 1 und 4),
16 ein Gummiband (s. ZB 1 und 7),
16a Haken (s. ZB 1 und 7),
16b Rückseite der Rückenlehne 1a (ZB 1 und 7),
17 einen Schlauch (Durchmesser ca. 35 mm) (s. ZB 4 bis 6 und 9), der
18 Düsen aufweist und in den ein Schlauch 5 mündet, dessen Durchmesser beispielsweise circa 20 mm beträgt (s. ZB 4 bis 6 und 9),
19 ein Polsterelement (s. ZB 4 bis 6),
20 einen Luftverteilerkasten (s. ZB 1 und 4),
21 ein Gitternetzelement (s. ZB 4 bis 6),
21 a das Gitternetz selbst (s. ZB 4 bis 6),
21 b Spannbänder für das Gitternetz 21 a (s. ZB 4 und 10),
22 ein Polster (s. ZB 4 bis 6 und 10),
23 die Rückwand der Rückenlehne (s. ZB 4 bis 6 und 10),
24 den Rahmen vom Gitternetz 21a (s. ZB 4),
25 den Rahmen vom Polster 22 (s. ZB 4),
26 den Rahmen des Fahrzeugsessels (s. ZB 4 bis 6),
27 einen Anschlag (vgl. ZB 4) für die Befestigung eines Polsterelements 19, eines Gitternetzelements 21 und der Rückwand 23 der Rückenlehne,
28 Anschläge seitlich für Einschub (s. ZB 4 bis 6),
29 Bohrlöcher für die Befestigungsschrauben (ZB 4),
30 Schrauben (s. ZB 5 und 6),
31 Abdeckkappen (s. ZB 5 und 6),
32 Gewindebohrungen (s. ZB 5 und 6),
33 Querstrebe (s. ZB 4 bis 6),
34 Einschub für Polsterelement 19, Gitternetzelement 21 und Polster 22 (s. ZB 4 und.10),
35 Be- und Entlüftungsschächte (s. beispielsweise ZB 7, 10 und 11).

Das Luftzufuhrsystem kann in der erfindungsgemäßen, klimatisierten bezw. belüfteten Sitz-/Liege-Vorrichtung für Fahrzeuge oder Möbel, insbesondere, wenn es sich um einen klimatisierten Fahrzeugsesel handelt, integriert sein. Der oder die Luftzufuhrschlauch /-schläuche 5 ist / sind an die zentrale Klimaanlage (Belüftungsanlage) des Fahrzeugs oder an eine stationäre Klima- oder Belüftungsanlage für Möbel angeschlossen. Mit Hilfe des / der Regelventils /-ventile 8 läßt sich die Stärke des zugeführten Luftstroms regulieren.

Der Luftzufuhrschlauch 5 mündet in der Ausführungsform gemäß Zeichnungsblättern 1 bis 3 in einen Luftschacht 6, der sowohl nach oben in Richtung auf das Gitternetz 11
/Polsterelement 9, das in die Rückenlehne 1a eingesetzt ist, als auch nach vorne zu in Richtung auf das Gitternetz-Polsterelement 9, das in den Fahrzeugsitz 1b eingelassen ist, Düsen 7/7a aufweist. Die gekühlte bezw. erwärmte Luft strömt dann durch diese Düsen in die Luftverteilerkästen 10 der Gitternetz-Polsterelemente 9 und durch die Öffnungen bezw. Maschen der Gitternetze. Überschüssige Luft kann durch die Entlüftungsschächte 15 entweichen.

Die Gitternetz-Polsterelemente 9 setzen sich jeweils aus einem Luftverteilerkasten 10 und einem Polster 12 zusammen. Dabei weist der Luftverteilerkasten auf der Außenseite ein Netz oder Gitter ("Gitternetz" 11) zum Austritt der Luft auf.

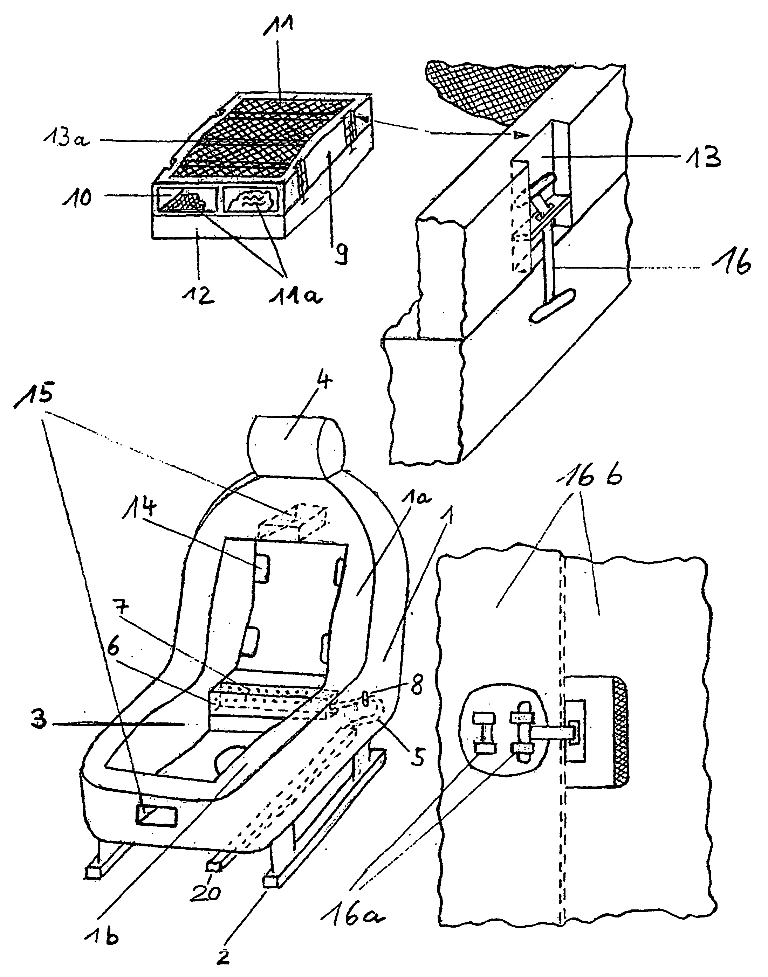

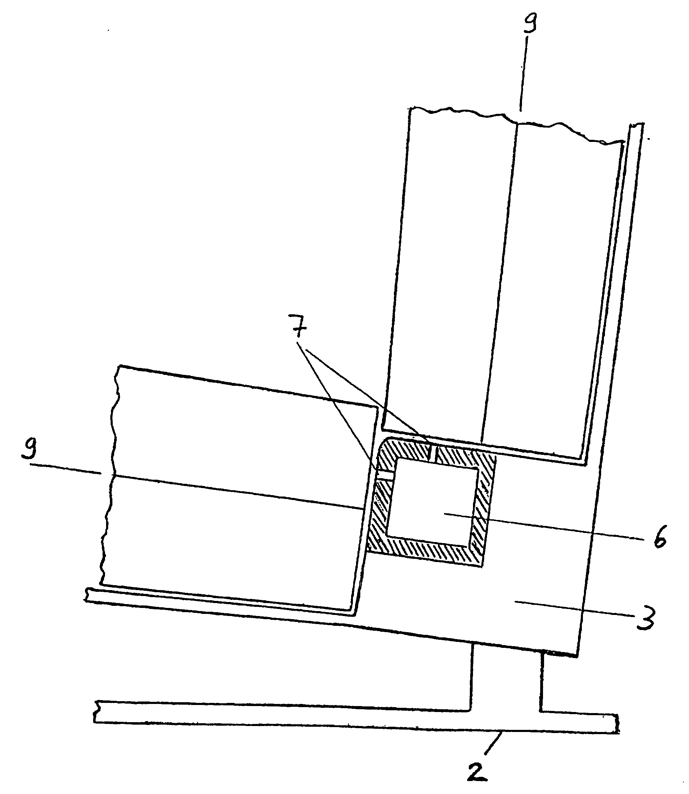

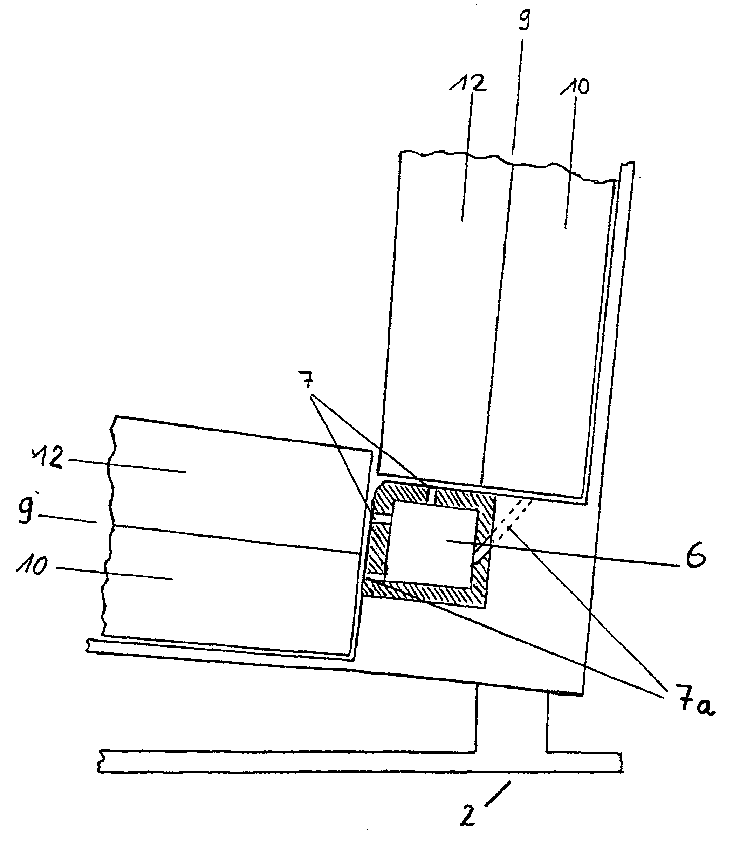

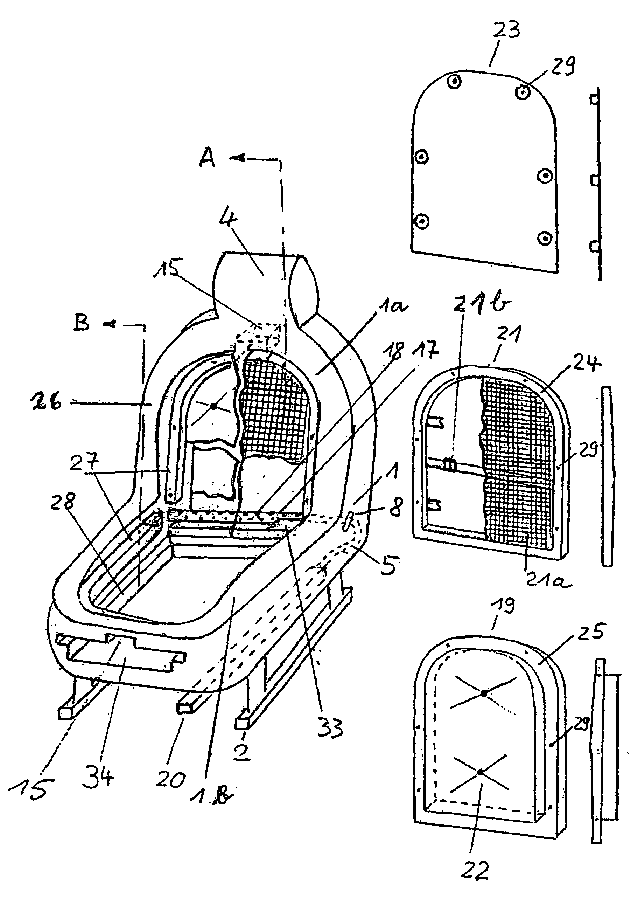

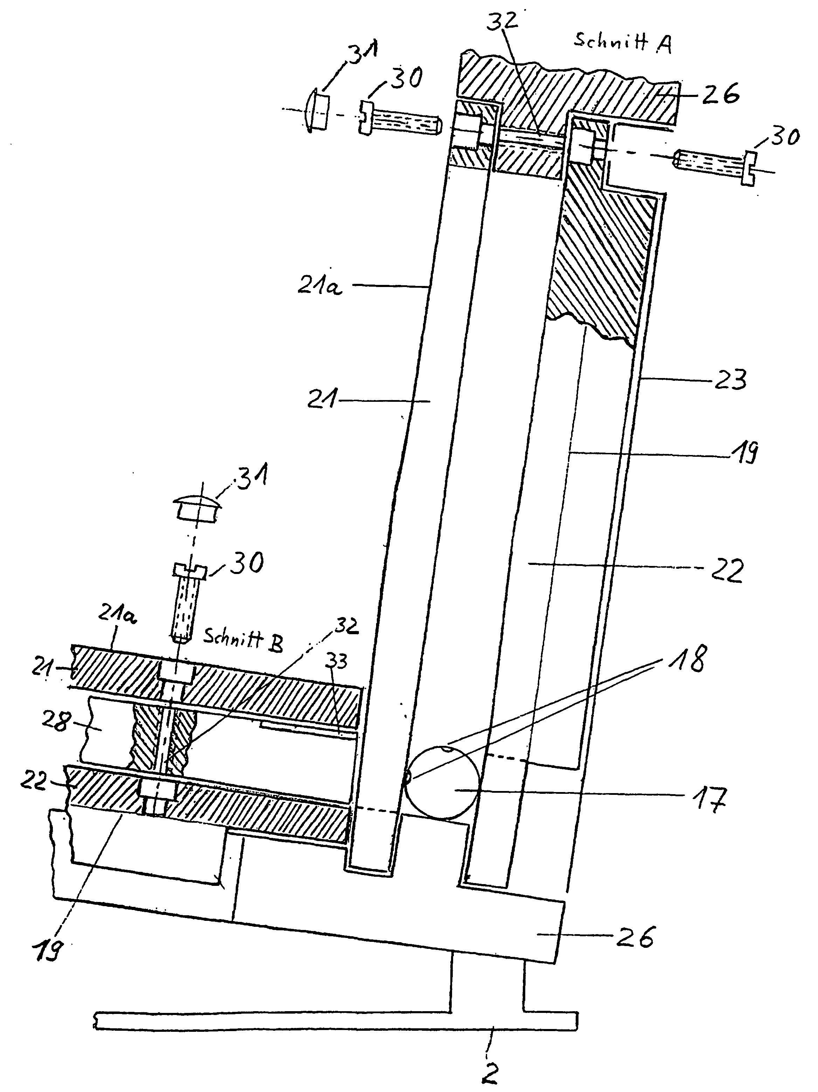

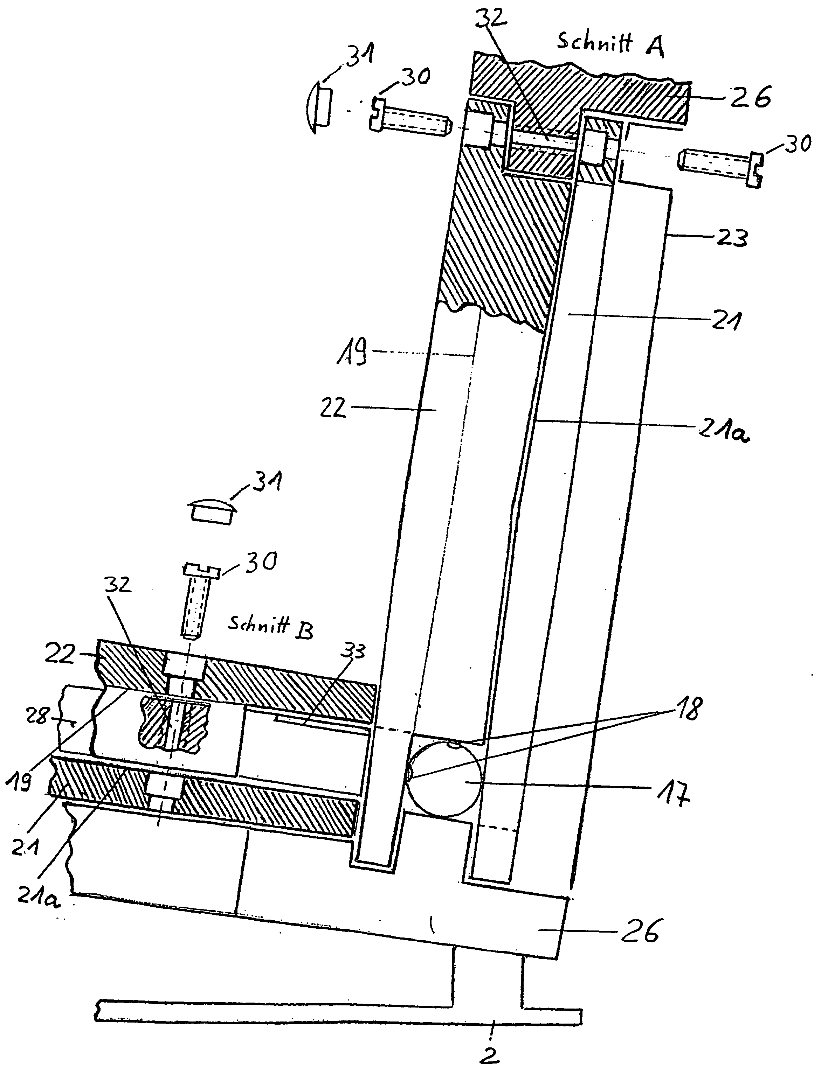

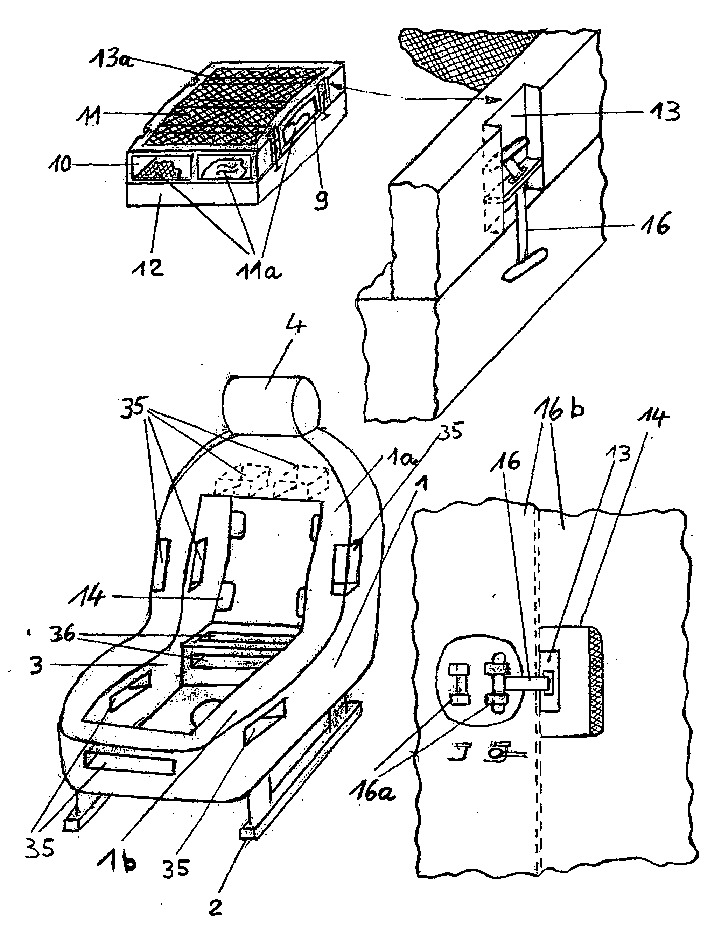

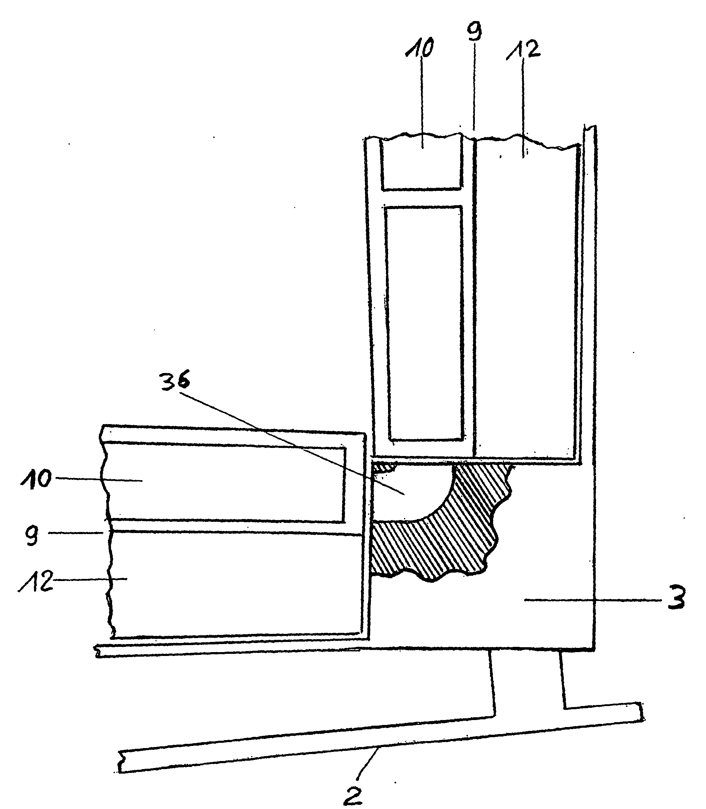

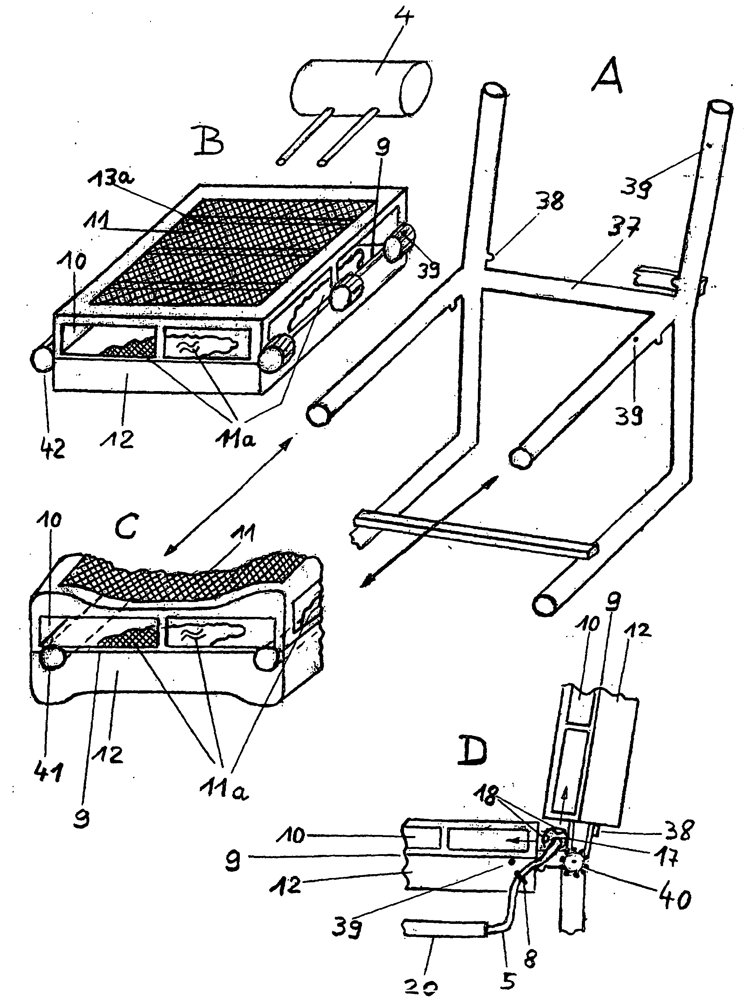

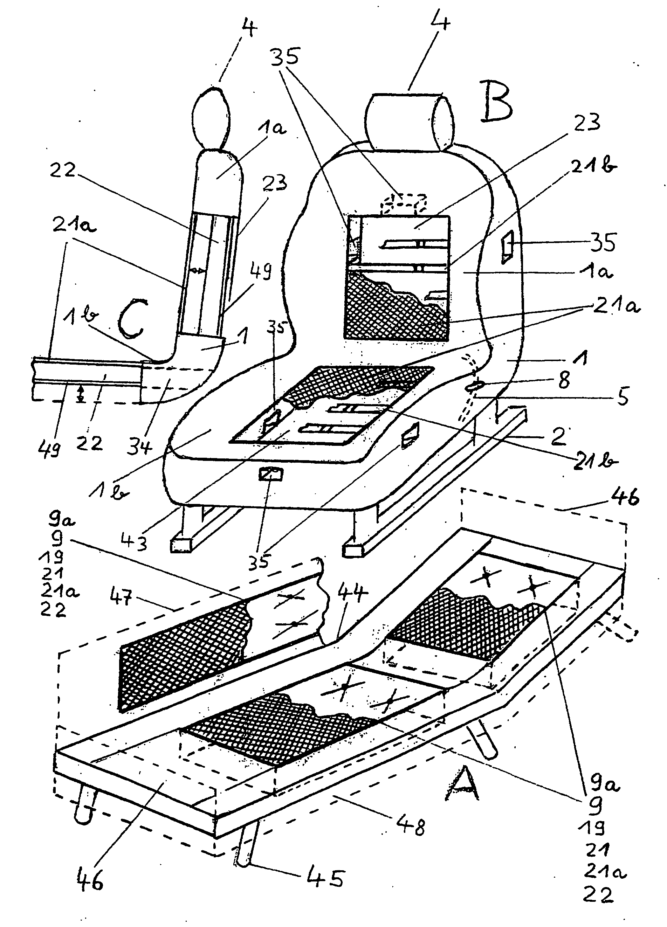

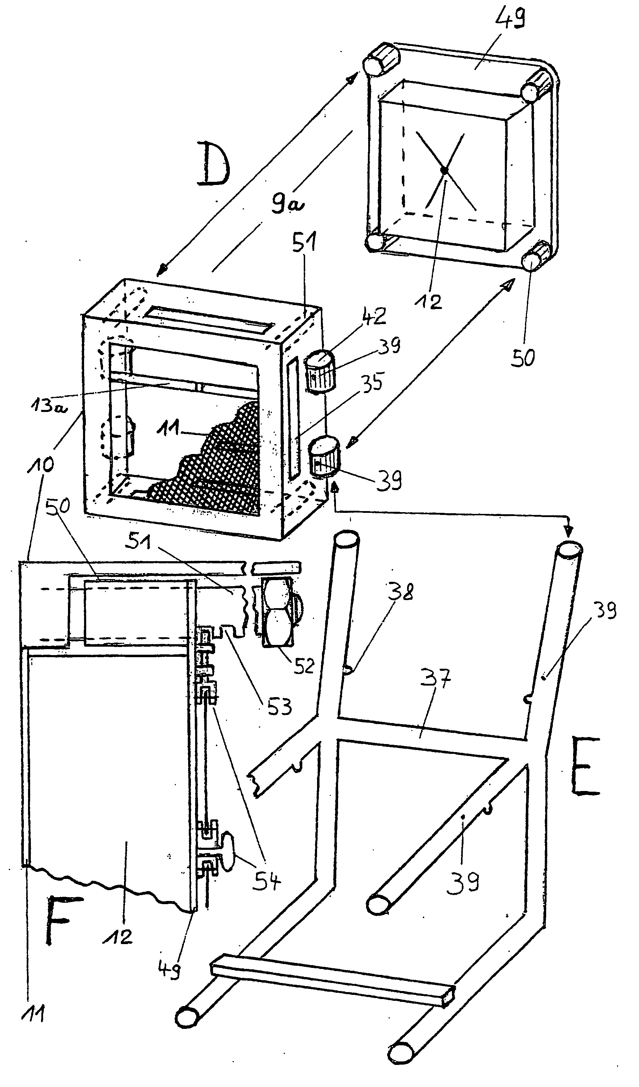

Die Befestigung des Gitternetz-Polsterelemente 9 in der Rückenlehne 1a kann, wie in Abbildungen 1 und 7 beispielhaft gezeigt, mittels Befestigungsvorrichtungen 13 erfolgen, die durch vier Aussparungen 14 in der Rückenlehne hindurchgeführt werden. Gummibänder 16 spannen das Gitternetz-Polsterelement 9 über die als Laschen ausgebildeten Befestigungsvorrichtungen 13 an Haken 16a fest. Auch andere Befestigungs-möglichkeiten fallen in den Bereich der Erfindung, wie Befestigungen mittels Druckknöpfen und/oder Klettverschlüssen.

Die Gitternetz-Polsterelemente 9 können je nach Wunsch, mit dem Gitternetz 11 oder dem Polster 12 dem Fahrer oder Fahrgast zugewandt oder abgewandt, in die Rückenlehne 1a eingesetzt werden. Entsprechendes gilt für das in den Sitz 1b eingefügte Gitternetz-Polsterelement 9. Dieses bedarf jedoch keiner besonderen Befestigung wie das Rückenlehnen-Gitternetz-Polsterelement, sondern kann einfach in die im Sitz 1b vorgesehene passgerechte Aussparung eingedrückt werden, und zwar je nach Wunsch entweder mit dem Luftverteilerkasten 10 und demzufolge mit dem Gitternetz 11 oder aber dem Polster 12 nach oben dem Fahrer oder Fahrgast zugewandt, wobei dann entweder das Polster 12 oder der Luftverteilerkasten 10 mit dem Gitternetz 11 unten liegen.

In einer Variante der Erfindung ist es auch möglich, mit nur einem Gitternetz-Polsterelement je Sessel auszukommen. In diesem Falle kommt nur das Gitternetz-Polsterelement für die Rückenlehne 1a oder den Sitz 1b zur Anwendung.

Alle Polster 12 der Gitternetz-Polsterelemente 9 und 9a und alle Polster 22 oder einige oder nur eines können, wenn gewünscht, auch mit einer elektrischen Heizung ausgestattet werden.

Bei einer anderen bevorzugten, vorstehend erwähnten Ausführungsform der Erfindung, die in den Abbildungen 4 bis 6 veranschaulicht ist, mündet der Luftzufuhrschlauch 5 in einen Kunststoffschlauch 17. Dieser Schlauch 17 (Durchmesser z. B. 35 mm) ist etwa so lang, wie der Sitz breit ist, und weist eine Vielzahl - z. B. 25 in Richtung Rückenlehne und 25 in Richtung Sitz - z. B. 4 mm im Durchmesser große, runde Löcher bezw. Bohrungen, hier Düsen 18 genannt, auf.

Die gekühlte bezw. erwärmte Luft strömt dann durch diese Düsen 18 in die Aussparungen des Sitzes 1b und der Rückenlehne 1a und durch die Öffnungen bezw. Maschen des Gitternetzelements 21, wenn dieses dem Fahrer oder Fahrgast bezw. der sitzenden Person zugewandt ist. Wenn dagegen das Polsterelement 19 dem Automobilisten bezw. der sitzenden Person zugewandt ist, dient das Gitternetzelement 21, in der Rückenlehne 1a von hinten verschraubt, der Stabilisierung des Polsterelementes 19. Im Sitz 1b übernimmt das Gitternetzelement 21 als Einschub 34 dementsprechend dieselbe Funktion, wenn das Polsterelement 19 dem Automobilisten bezw. der sitzenden Person zugewandt ist.

Das Gitternetz 21a des Gitternetzelementes 21 kann entweder selbsttragend sein oder durch Spannbänder 21b stabilisiert werden.

Wenn das Gitternetzelement 21 dem Fahrer bezw. Fahrgast zugewandt ist, dient das Polsterelement 19 im Sitz als Einschub 34 und in der Rückenlehne 1a, von hinten verschraubt, als Barriere oder Begrenzung für die Entstehung eines zweckmäßigen Luftschachtes. Die Polsterelemente 19 und die Gitternetzelemente 21 werden mit den Anschlägen 27 verbunden, und zwar vorzugsweise durch Verschrauben. Die Verwendung von anderen Verbindungsmöglichkeiten, wie Verkleben, Klettverschließen, Verklammern u.s.w., liegen für den Fachmann auf der Hand. Die Polsterelemente 19 und die Gitternetzelemente 21 sind in der gezeigten Ausführungsform der Erfindung mit Rahmen 24/25 versehen. 23 bedeutet die Rückwand der Rückenlehne, von hinten dargestellt. Die Rückwand weist Löcher 29 für die Befestigungsschrauben 30 auf. Überschüssige Luft kann durch die Entlüftungsschächte 15 entweichen.

Wenn man bei den vorstehend beipielsweise an Hand der Zeichnungsblätter 4 bis 6 erläuterten Ausbildungsformen des erfindungsgemäßen, belüfteten Sessels die Zwangsklimatisierungs-(Zwangsbelüftungs-)vorrichtungen wegläßt und dafür zuzüglich seitliche Be- und Entlüftungsschächte 35 (s. Zeichnungsblatt 7) vorsieht, ergibt sich eine weitere vorteilhafte Ausbildungsform der Erfindung.

Der Anschlag 28 für den Einschub verhindert ein Durchfallen des Polsterelementes 19 und des Gitternetzelementes 21.

Bei allen Varianten der Ausführungsformen, die auf den Zeichnungsblättern 1 bis 6 veranschaulicht sind, kann in der Rückenlehne eine andere Kombination als im Sitz und viceversa gewählt werden.

Die Luftschläuche 5, 6 und 17 bezw. der Schacht bestehen beispielsweise aus einem Kunststoff, wie Polyethylen, Polypropylen, Polyamid, Polybutadien u.s.w.

Das Regelventil 8 ermöglicht es, den Luftstrom zu drosseln. Ein allzu kräftiger Luftstrom ist in der Regel nicht erwünscht. Der Luftaustritt aus den Düsen sollte schwach sein.

Die Gitternetze 11 und 21a können Netze oder Gitter aus beispielsweise kunststoffummanteltem Metall oder aus Kunststoff oder auch gegebenenfalls aus pflanzlichen Materialien, wie Rattan, Bast, Weiden, Palmbast, Segeltuch, Canvas, Gewirken, Geflecht, insbesondere Geflechten aus Baumwolle und/oder Kunstfasern mit eingeflochtenen Gummibändern, u.s.w., sein, immer vorausgesetzt, daß das Netz/Gitter luftdurchlässig ist. Die Maschengröße ist beispielsweise 2 bis 8 mm. Die Netze oder Gitter können zusätzlich mit einem luftdurchlässigen Stoff oder beispielsweise perforiertem Leder überspannt sein. Dadurch wird für eine besonders gleichmäßige Verteilung der zugeblasenen Luft gesorgt. Die Gitternetze können selbsttragend sein oder auch beispielsweise mittels geeigneten Spannbändern 13a, 21b stabilisiert werden.

Nachfolgend wird die Erfindung insbesondere an Hand verschiedener Varianten und der Zeichnungen 7 bis 9 weiter erläutert.

Es bedeuten weiterhin
36 einen Luftverbindungsschacht (ZB 7 und 8),
   [Der auf den Zeichnungsblättern 7 und 8 dargestellte erfindungsgemäße Sessel ist so konzipiert, daß eine Zwangsbelüftung wie sie bei dem auf dem Zeichnungsblatt 1 abgebildeten erfindungsgemäßen Sessel erforderlich ist, nicht benötigt wird und daher auch nicht vorgesehen ist]
37 ein Rohrgestell (ZB 9 und 11),
   [Anstelle eines Rohrgestells 37 können gegfls. auch Gestelle aus Vierkant-, Sechskant- oder anderen Profilen verwendet werden. Die Gestelle können aus Stahl, Aluminium, Kunststoffen, Holz oder anderen geeigneten Stoffen hergestellt werden.]
38 Anschläge (ZB 9 und 11),
   [Die Anschläge 38 können auch als Querstreben ausgebildet sein. Diese Variante gewährt z. B. bei Fahrzeugsesseln mit Rückenlehnenverstellung bessere Stabilität.]
39 Sicherungen der Gitternetz-Polsterelemente 9 und 9a (s. Figuren A, B, C, D auf dem Zeichnungsblatt 9 sowie Figuren D und E auf dem Zeichnungsblatt 11),
   [Die Sicherungen 39 können beispielsweise als Stecksplinte oder Arretierungsn mit Kugel- und Federbelastung ausgebildet sein.]
40 eine Rückenlehnenverstellung (Blatt 9 Fig. D),
41 innenliegende Befestigungs-Steckrohre (ZB 9, Fig. C) und
42 außenliegende Befestigungs-Steckrohre (ZB 9, Fig. B sowie ZB 11, Fig. D).

Im Falle, daß anstelle von Rohrgestellen Gestelle aus anderen Profilen verwendet werden, sind 41 bezw. 42 passende Steckprofile.

Die Gitternetz-Polsterelemente 9 und 9a (vgl. z. B. Fig. B und C auf dem ZB 9 sowie Fig. D auf ZB 11) können auch mit Nackenstützen 4 ausgestattet werden. Auch abgewandelte Ausführungsformen der Gitternetz-Polsterelemente 9 und 9a können erfindungsgemäß, z. B. wie in Figur C auf dem Blatt 9 gezeigt, mit Wülsten ausgelegt werden.

Gitternetz-Polsterelemente 9 und 9a mit außenliegenden Befestigungs-Steckrohren 42 können sowohl in den Sitz als auch in die Rückenlehne eingeschoben werden, indem sie in das Rohrgestell 37 vertikal oder horizontal eingeschoben werden. Dies ist in Figur A auf dem Blatt 9 und in Figur E auf ZB 1 1 beispielhaft veranschaulicht. Entsprechendes gilt für Gitternetz-Polsterelemente 9 und 9a mit innenliegenden Befestigungs-Steckrohren 41.
Außerdem können Gitternetz-Polsterelemente 9 und 9a mit außen- und innenliegenden Befestigungs-Steckrohren 42 bezw. 41 auch gemischt in das Rohrgestell 37 vertikal oder horizontal eingeschoben werden.

Weiterhin können die Gitternetz-Polsterelemente 9, ob in der Rückenlehne oder im Sitz, beliebig um 180 Grad gedreht werden. Das Gitternetz 11 und/oder das Polster 12 ist dem Sesselbenutzer entweder zu- oder abgewandt.

Es wäre auch möglich, mit nur einem Gitternetz-Polsterelement 9 oder 9a je Rohrgestell 37 auszukommen.

Ausführungsformen, gemäß denen Rohr- bezw. Profilgestelle 37 für den Aufbau der erfindungsgemäßen Vorrichtung, beispielsweise eines belüfteten Liege- oder Sitzmöbels, also mit Sesseln oder Sesselelementen, wie sie auf den Zeichnungsblättern 4 bis 6 beispielhaft veranschaulicht sind, kombiniert werden, fallen ebenfalls unter den Schutzumfang der vorliegenden Erfindung. In solchen Fällen sind an die Gitternetzelemente 21 und an die Polsterelemente 19 innenliegende bezw. außenliegende Befestigungssteckrohe 41 bezw. 42 sowie Sicherungen 39 (vgl. Figur C bezw. Figur B auf Zeichnungsblatt 9) anzubringen. Für den Fall, daß der betreffende Sessel ein Fahrzeugsessel ist, könnten die Nackenstützen 4 an dem Gitternetzelement 21, an dem Polsterelement 19 oder am Rohrgestell 37 angebracht werden.

Reserve-Gitternetzelemente und Polsterelemente, die nach einem Umrüsten vorübergehend nicht benötigt werden, können gegfls. unter den Autositzen in geeigneter Weise verstaut werden.

Sehr vorteilhaft hat sich erwiesen, daß bei der vorstehend erläuterten Ausführungsform der Erfindung, gemäß der mit Rohrgestellen bezw. Profilgestellen gearbeitet wird, eine Umrüstung von einer Varianten in die andere sehr schnell, manchmal in Sekundenschnelle, zu bewerkstelligen ist.

Wenn beispielsweise die Elemente Rohrgestell 37 und Gitternetz-Polsterelemente 9 und 9a mit Schlauch 17, Düsen 18, Luftzufuhrschlauch 5 und Regelventil 8 erfindungsgemäß kombiniert werden, erhält man einen mit Zwangsluftzufuhr klimatisierbaren, erfindungsgemäßen Sessel (Figur D auf Zeichnungsblatt 9).

Es ist auch möglich, die Gitternetz-Polsterelemente 9 so zu gestalten, daß die Polster 12 (s. ZB 1, 7 und 9, Fig. B und C) abnehmbar sind, indem sie mittels Druckknöpfen, Klettverschlüssen oder anderen leicht vorübergehend lösbaren Verschlüssen ausgestattet sind. Dies kann zum Zwecke der besseren und leichteren Reinigung von Vorteil sein. Entsprechendes gilt natürlich auch für die Polster 22 der Polsterelemente 19.

Es bedeuten weiterhin (vgl. insbesonder ZB 10 und 11)
43 ein Sesselboden (ZB 10, Fig. B),
44 Liege, Bett, Bettsofa, Sofa oder ähnliches (ZB 10, Fig. A),
45 Füsse der Liege etc. 44,
46 Bettladen (ZB 10, Fig. A),
47 Sofa- oder Bettsofa-Rückenlehne (ZB 10, Fig. A) und
48 einen Bettkasten. (ZB 10, Fig. A).
49 Polsterrücken bezw. Boden (ZB 10 und 11, Fig. C, D und F)
50 Führungsrohr (ZB 11, Fig. D und F)
51 Führungsbolzen (ZB 11, Fig. D und F)
52 Mutter (ZB 11, Fig. F)
53 Rasten (ZB 11, Fig. F)
54 Verriegelung mit Drehgriff (ZB 11, Fig. F).

Der bezw. die Luftzufuhrschläuche 5 können an eine zentrale Klimaanlage (Belüftungsanlage) angeschlossen werden.

Gemäß einer besonderen Ausführungsform der Erfindung sind die Gitternetze 21 a (vgl. ZB 10) - mit oder ohne Rahmen - mit der Rückenlehne oder dem Sitz beispielsweise vernäht, verklebt, verschweißt, verklammert oder in anderer geeigneter Weise fest verbunden. Auch zwischenzeitlich auflösbare Verbindungsmethoden, wie Reißverschlüsse, Klettverschlüsse, Druckknöpfe u. s. w. können zu diesem Zwecke herangezogen werden. Ein oder mehr als ein Gitternetz 21a kann, wenn gewünscht, mit einer luftdurchlässigen elektrischen Heizung ausgestattet werden.

Eine weitere Abwandlungsmöglichkeit der Erfindung wäre die, mit nur einem Gitternetz 21 a je Sessel zu operieren.

Bei der in Figur B auf Zeichnungsblatt 10 gezeigten Ausführungsform der Erfindung kommen die Gitternetze 21 a alleine, d. h. ohne entsprechende Polstergegenstücke (z.B. 12 oder 22), zur Anwendung. Auf diese Weise entsteht zwischen dem Gitternetz 21a und der im allgemeinen (aber nicht notwendigerweise immer) vorhandenen Rückwand 23 - im Rückenbereich - bezw. Sesselboden 43 - im Gesäßbereich - ein für die Erfindungszwecke willkommener Luftschacht. Der Luftschacht begünstigt die Klimatisierungswirkung.

Je nach Bedarf können auch Be- und Entlüftungsschächte 35 vorgesehen werden. Denkbar sind stattdessen nur Aussparungen in der Rückwand 23 oder im Boden 43.

Gemäß einer weiteren bevorzugten Ausführungsform, bei der die Gitternetze 21a mit dem Sessel fest verbunden sind, ist es auch möglich, nach Wunsch und Bedarf die Polster 22 (Figur C auf Zeichnungsblatt 10) in der Rückenlehne von hinten und im Sitz von unten an die Gitternetze 21a anzupressen. Dies wäre im Sitz, wie an Hand des Zeichnungsblattes 4 leicht zu verstehen ist, auch über die Einschübe 34 (vgl. Fig. C auf ZB 10 oder seitlich oder von hinten möglich.

In der Rückenlehne ist das Polster 22 (Fig. C, ZB 10) von hinten beispielsweise mit Klapp- oder Klemmverschlüssen oder anderen geeigneten Befestigungssystemen unter eventueller Einbeziehung der Rückwand zu befestigen.

Im Falle ablösbarer Gitternetze 21 a sind die Polster 22 (s. Figur B auf Zeichnungsblstt 10) in der Rückenlehne von vorne und im Sitz senkrecht von oben leicht einzudrücken.

Gemäß einer anderen bevorzugten Ausführungsform der Erfindung (vgl. Fig. C und B, ZB 10) bei die Gitemetze 21 a dem Benutzer zugewandt sind, ist das Polster 22 der Rückenlehne z. B. auf einer geeigneten Bolzen (51) - Rohr (50)-Führung in Richtung auf das Gitternetz zu - oder von ihm weg - verschiebbar und in gewünschten Positionen verriegelbar. Das Polster 22 kann auch ganz an das Gitternetz bis zum Kontakt herangeschoben werden. Die technische Lösung ist ist in den Figuren D und F auf dem Zeichnungsblatt 11 (Verriegelung mit Drehgriff 54) illustriert. Zwischen dem Gitternetz 21 a und dem Polster 22 kann ein veränderlicher, zweckmäßiger Luftschacht gebildet werden. Auch andere Methoden kommen für die Verschiebung des Polsters in Frage, beispielsweise unter Verwendung von Loch-, Gleit-, Raster-, Zahnschienen u.s.w. und durch elektrischen Antrieb. Diese Ausführungsform ist mit oder ohne Verwendung einer Rückwand realisierbar.

In analoger Weise, wie oben beschrieben, (vgl. Fig. B und C, ZB 10) können auch die Gitternetz-Polsterelemente 9a (vgl. Fig. D und F, ZB 11) zwischen Gitternetz 11 und verschiebbarem Polster 12 verschiebbar ausgestaltet werden. Die Polster 12 und 22 können auf Wunsch mit einer elektrischen Heizung ausgestattet werden.

Gegebenenfalls können einige Be- und Entlüftungsschächte 35 angebracht werden. An deren Stelle können gegebenenfalls Aussparungen am Polsterrücken bezw. Boden 49 treten. Diese Variationsmöglichkeiten sind sinngemäß auch auf den Sitzbereich übertragbar.

Es liegt für den Fachmann auf der Hand, daß sämtliche oben im Zusammenhang mit Sitzmöbeln beschriebenen und konzipierten Belüftungsausführungen, z. B. Gitternetz-Polsterelemente 9 und 9a, Polsterelemente 19, Gitternetzelemente 21, Gitternetze 21a und Polster 22, Rückwände 23 bezw. Sesselböden 43 grundsätzlich auch auf Liegemöbel übertragen werden können.

Die Klimatisierung der Rückenpartie der sitzenden oder liegenden Person, wenn gewünscht mit vorgekühlter, vorgetrockneter oder vorgewärmter Luft, wie es durch die Verwendung der neuen klimatisierten bezw. belüfteten Sitz-/Liege-Vorrichtung für Fahrzeuge oder Möbel ermöglicht wird, wird als sehr angenehm, gerade auch bei Autoreisen, empfunden. Mit den herkömmlichen Klimaanlagen dagegen gelangt der Luftstrom nicht in den Rücken- und Nierenbeckenbereich.

Zur Erhöhung des Komforts läßt sich erfindungsgemäß der Belüftungseffekt sogar variabel gestalten, so daß die sitzende Person ohne größeren Aufwand die Klimatisierung ihren Wünschen anpassen kann, und zwar sowohl im Falle von Fahrzeugsitzen als auch im Bereich von Sitz- und Liegemöbeln.

Ein von der Rückenlehne und der Sitzfläche bezw. dem oberen und unteren Teil der Liege her auf die sitzende bezw. liegende Person einwirkender schwacher Luftstrom wirkt sich insbesondere bei längerem Sitzen, Liegen und längeren Fahrten sehr vorteilhaft auf das Wohlbefinden aus, weil besonders bei sehr hohen oder tiefen Temperaturen Schwitzen, Hitzestau bezw. Unterkühlung im Rückenbereich und insbesondere in der Nierengegend vermieden werden können. Einer Unterkühlung (Erkältung) oder Überhitzung (Hitzestau) wird vorgebeugt.

## Patentansprüche

1. Klimatisierte bezw. belüftete Sitz-/Liege-Vorrichtung für Fahrzeuge oder Möbel, bestehend aus einem unteren Teil bezw. Sitzteil und einem oberen Teil bezw. Rückenlehnenteil und/oder Kopfteil, gegebenenfalls (gegfls.) Armstützen und gegfls. einem Luftzufuhr- und Enlüftungssystem, **dadurch gekennzeichnet, daß** die zentralen Bereiche des unteren Teils bezw. Sitzteiles und des oberen Teils bezw. des Rückenlehnenteils und/oder Kopfteils aus Hohlräume aufweisenden Gitternetz-Polsterelementen 9 oder paarweise aus Gitternetzelementen 21 und Polsterelementen 19 bestehen, welche Gitternetz-Polsterelemente 9 bezw. Gitternetzelemente 21 und Polsterelemente 19 aus- und einbaubar sind und ihre Position vertauschen können.

2. Vorrichtung nach Anspruch 1, **dadurch gekennzeichnet, daß** die Abstände zwischen den Gitternetzen 11 und den Polstern 12 der Gitternetz-Polsterelementen 9a bezw. die Abstände zwischen den Gitternetzen 21a und den Polstern 22 in vorgegebener Weise verändert und eingestellt werden können (s. insbesondere Zeichnungsblätter 11 und 10).

3. Vorrichtung nach Anspruch 1 oder 2, **dadurch gekennzeichnet, daß** sie ein Fahrzeugsitz ist.

4. Vorrichtung nach Anspruch 1oder 2, **dadurch gekennzeichnet, daß** sie eine Liege, eine Couch, ein Sofa, ein Bettsofa, ein Bett, ein Stuhl, ein Sessel oder eine Sitzbank ist.

5. Vorrichtung nach einem der Ansprüch 1 bis 4, **dadurch gekennzeichnet, daß** mindestens eines, aber nicht alle, der aufgeführten Belüftungssysteme im unteren Teil bezw. Sitzteil und/oder im oberen Teil bezw. Rückenlehnenteil und/oder Kopfteil entfällt (entfallen).

6. Vorrichtung nach einem der Ansprüche 1 bis 5, **dadurch gekennzeichnet, daß** die Gitternetz-Polsterelemente 9/9a bezw. Gitternetzelemente 21, Polsterelemente 19, Gitternetze 21a, Polster 22, Rückwände 23 bezw. Böden 43 im eingebauten Zustand an ein Luftzufuhr- und Entlüftungssystem angeschlossen sind.

7. Vorrichtung nach einem der Ansprüche 1 bis 6, **dadurch gekennzeichnet, daß** das bezw. mindestens eines der Gitternetze 21a mit dem belüfteten Liege- oder Sitzmöbel dauerhaft oder ablösbar verbunden ist.

8. Vorrichtung nach Anspruch 7, **dadurch gekennzeichnet, daß die** dauerhafte und gegfls. lösbare Verbindung durch Nähen, Kleben, Verschweißen, Knöpfen (mittels Druckknöpfen), Verklammern und/oder Klettverschließen bewerkstelligt ist.

9. Vorrichtung nach einem der Ansprüche 1 bis 8, **dadurch gekennzeichnet, daß** das/die Gitternetze 11 bezw. das/die Gitternetze 21a mit einer luftdurchlässigen elektrischen Heizung ausgerüstet ist (sind) und/oder die Polster 12 und/oder 22 mit einer elektrischen Heizung ausgerüstet ist (sind)

10. Vorrichtung nach Anspruch 3 oder 4, **dadurch gekennzeichnet, daß** die Gitternetz-Polsterelemente 9 aus Gitternetzen 11 und Polstern 12 aufgebaut sind, die über einen zwischen ihnen liegenden Luftverteilerkasten 10 fest miteinander verbunden sind, wobei die Verbindung der Polster 12 mit den Gitternetzen 11 über den dazwischen liegenden Luftverteilerkasten 10 gegefls. vermittels Druckknöpfen, Klettverschlüssen oder anderen leicht vorübergehend lösbaren Verschlüssen verbunden erfolgen kann und wobei die Polster 12 der sitzenden Person entweder zugewandt oder abgewandt sind.

11. Vorrichtung nach Anspruch 3 oder 4, **dadurch gekennzeichnet, daß** die Gitternetzelemente 21 und die Polsterelemente 19 über einen zwischen ihnen liegenden Rahmen oder Anschlag 27 miteinander verbunden sind, wobei von dem Rahmen bezw. Anschlag und dem Gitternetzelement 21- und Polsterelement 19-Paar ein Luftschacht geformt wird, wenn das Gitternetzelement der sitzenden Person zugewandt ist, wobei aber das Gitternetzelement an dem Polsterelement anliegt und dieses stützt, wenn andererseits der sitzenden Person das Polsterelement zugewandt ist.

12. Vorrichtung nach Anspruch 11, **dadurch gekennzeichnet, daß** die Gitternetzelement 21- und Polsterelement 19-Paare mit dem zwischen ihnen liegenden Rahmen bezw. Anschlag 27 verschraubt sind.

13. Vorrichtung nach einem der Ansprüche 1 bis 12, **dadurch gekennzeichnet, daß** der Sitzteil und/oder der Rückenlehnenteil aus einem Rohr- oder Profilgestell 37 bestehen.

14. Vorrichtung nach Anspruch 13, **dadurch gekennzeichnet, daß** die Gitternetz-Polsterelementen 9/9a bezw. Gitternetzelemente 21 und Polsterelemente 19 innenliegende 41 und/oder außenliegende 42 Befestigungs-Steckrohre bezw. Befestigungs-Steckprofile, Klappverschlüsse, Federklammem oder Klemmverschlüsse aufweisen.

15. Vorrichtung nach einem der Ansprüche 1 bis 14, **dadurch gekennzeichnet, daß** eine Rückenlehnenverstellung 40 und/oder eine Nackenstütze vorgesehen ist.

16. Klimatisierte bzw. belüftete Sitz-/Liege-Vorrichtung für Fahrzeuge oder Möbel nach einem der Ansprüche 2 bis 10 oder 13 bis 15, **dadurch gekennzeichnet, dass** zur vorgegebenen Veränderung der Abstände zwischen den Gitternetzen und den Polstern Loch-, Gleit-, Raster- bzw. Zahnschienen vorgesehen sind.

## Claims

1. An air-conditioned or respectively ventilated seat/couch device for vehicles or furniture, comprising a lower part or respectively seat part and an upper part or respectively back rest part and/or head part, if required arm rests and if required a air supply and ventilation system, **characterised in that** the central regions of the lower part or respectively seat part and of the upper part or respectively of the back rest part and/or head part comprise mesh cushion elements 9 having hollow spaces or in pairs comprise mesh elements 21 and cushion elements 19, which mesh cushion elements 9 or respectively mesh elements 21 and cushion elements 19 can be removed and inserted and their position can be interchanged.

2. The device as claimed in Claim 1, **characterised in that** the distances between the meshes 11 and the cushions 12 of the mesh cushion elements 9a or respectively the distances between the meshes 21a and the cushions 22 can be altered in preset manner and can be adjusted (see in particular diagrams 11 and 10).

3. The device as claimed in Claim 1 or 2, **characterised in that** it is a vehicle seat.

4. The device as claimed in Claim 1 or 2, **characterised in that** it is a cot, a couch, a sofa, a bed sofa, a bed, a chair, an armchair or a bench.

5. The device as claimed in any one of Claims 1 to 4, **characterised in that** at least one, though not all, of the abovementioned ventilation systems is not present in the lower part or respectively seat part and/or in the upper part or respectively back rest part and/or head part.

6. The device as claimed in any one of Claims 1 to 5, **characterised in that** the mesh cushion elements 9/9a or respectively mesh elements 21, cushion elements 19, meshes 21a, cushions 22, back walls 23 or respectively floors 43 are attached to an air supply and ventilation system in the assembled state.

7. The device as claimed in any one of Claims 1 to 6, **characterised in that** the or respectively at least one of the meshes 21a is connected permanently or detachably to the ventilated cot or seat furniture.

8. The device as claimed in Claim 7, **characterised in that** the permanent and if required detachable connection is realised by sewing, adhesion, welding, buttoning (by means of press studs), cramping and/or Velcro®.

9. The device as claimed in any one of Claims 1 to 8, **characterised in that** the meshes 11 or respectively the meshes 21a are equipped with air-permeable electric heating and/or the cushions 12 and/or 22 are equipped with electric heating.

10. The device as claimed in Claim 3 or 4, **characterised in that** the mesh cushion elements 9 are made out of meshes 11 and cushions 12, which are connected solidly to one another by an air diffuser 10 lying between them, whereby the connection of the cushion 12 to the meshes 11 can be made via the interposed air diffuser 10 by means of press buttons, Velcro or other easily detachable closures, and whereby the cushions 12 are either facing or averted from the seated person.

11. The device as claimed in Claim 3 or 4, **characterised in that** the mesh elements 21 and the cushion elements 19 are interconnected via an interposed frame or stop 27, whereby an air shaft is formed by the frame or respectively the stop and the mesh element 21 and cushion element 19 pair, whenever the mesh element if facing the seated person, whereby the mesh element lies on the cushion element and supports the latter, when the cushion element is facing the seated person.

12. The device as claimed in Claim 11, **characterised in that** the mesh element 21 and cushion element 19 pairs are screwed to the frame or respectively stop 27 lying between them.

13. The device as claimed in any one of Claims 1 to 12, **characterised in that** the seat part and/or the back rest part comprise a pipe or profile frame 37.

14. The device as claimed in Claim 13, **characterised in that** the mesh cushion elements 9/9a or respectively mesh elements 21 and cushion elements 19 have inner 41 and/or outer 42 fastening couplers or respectively fastening coupling profiles, hinged lids, spring clips or clamping couplers.

15. The device as claimed in any one of Claims 1 to 14, **characterised in that** a back rest adjustment 40 and/or a neck support is provided.

16. An air-conditioned or respectively ventilated seat/couch device for vehicles or furniture as claimed in any one of Claims 2 to 10 or 13 to 15, **characterised in that** rails fitted with holes, slides, notches or respectively teeth are provided for predetermined modification to the distances between the mesh elements and the cushion elements.

## Revendications

1. Dispositif siège/couchette climatisé, respectivement ventilé, pour des véhicules ou des meubles, constitué d'une partie inférieure, respectivement d'une assise et d'une partie supérieure, respectivement d'un dossier et/ou d'une partie de tête, le cas échéant d'accoudoirs et le cas échéant d'un système d'alimentation en air et d'évacuation de l'air, **caractérisé en ce que** les régions centrales de la partie inférieure, respectivement de l'assise et de la partie supérieure, respectivement du dossier et/ou de la partie de tête sont constituées en éléments de capitonnage en réseau quadrillé 9 comportant des cavités creuses ou en éléments en réseau quadrillé 21 et en éléments de capitonnage 19 appairés, lesquels éléments de capitonnage en réseau quadrillé 9, respectivement éléments en réseau quadrillé 21 et éléments de capitonnage 19 étant démontables et montables et interchangeables dans leur position.

2. Dispositifs selon la revendication 1, **caractérisé en ce que** les distances entre les réseaux quadrillés 11 et les capitons 12 des éléments de capitonnage en réseau quadrillé 9a, respectivement les distances entre les réseaux quadrillés 21a et les capitons 22 peuvent être modifiées et réglées de façon prédéfinie (voir notamment pages de dessins 11 et 10).

3. Dispositif selon la revendication 1 ou 2, **caractérisé en ce qu'il** est un siège de véhicule.

4. Dispositif selon la revendication 1 ou 2, **caractérisé en ce qu'il** est une couchette, un canapé, un divan, un canapé-lit, un lit, une chaise, un fauteuil ou un banc.

5. Dispositif selon l'une quelconque des revendications 1 à 4, **caractérisé en ce qu'au** moins l'un des systèmes de ventilation mentionnés, mais pas tous n'existe pas (n'existent pas) dans la partie inférieure, respectivement l'assise et/ou dans la partie supérieure, respectivement le dossier et/ou dans la partie de tête.

6. Dispositif selon l'une quelconque des revendications 1 à 5, **caractérisé en ce qu'**à l'état monté, les éléments de capitonnage en réseau quadrillé 9/9a, respectivement les éléments en réseau quadrillé 21, les éléments de capitonnage 19, les réseaux quadrillés 21a, les capitons 22, les parois arrière 23, respectivement les fonds 43 sont branchés sur un système d'alimentation en air et d'évacuation de l'air.

7. Dispositif selon l'une quelconque des revendications 1 à 6, **caractérisé en ce que** le réseau quadrillé 21, respectivement l'un d'entre eux est relié de façon durable ou amovible avec le siège/ou la couchette ventilé(e).

8. Dispositif selon la revendication 7, **caractérisé en ce que** la liaison durable et le cas échéant amovible est assurée par couture, collage, soudage, boutonnage (à l'aide de boutons-pression), agrafage et/ou ruban à crampons et boucles.

9. Dispositif selon l'une quelconque des revendications 1 à 8, **caractérisé en ce que** le/les réseau(x) quadrillé(s) 11, respectivement le/les réseau(x) quadrillés 21 est (sont) équipé(s) d'un chauffage électrique perméable à l'air et ou les capitons 12 et/ou 22 sont équipés d'un chauffage électrique.

10. Dispositif selon la revendication 3 ou 4, **caractérisé en ce que** les éléments de capitonnage en réseau quadrillé 9 sont conçus en réseaux quadrillés 11 et en capitons 12, qui sont fixement reliés entre eux par l'intermédiaire d'un caisson de distribution d'air 10 placé entre eux, la liaison des capitons 21 avec les réseaux quadrillés 11 par l'intermédiaire du caisson de distribution d'air 10 placé entre eux pouvant être effectuée le cas échéant à l'aide de boutons-pression, de rubans à crampons et à boucle ou d'autres fermetures facilement amovibles de façon provisoire et les capitons 12 faisant soit face à la personne assise ou étant opposés à cette dernière.

11. Dispositif selon la revendication 3 ou 4, **caractérisé en ce que** les éléments en réseau quadrillé 21 et les éléments de capitonnage 19 sont reliés entre eux par l'intermédiaire d'un cadre ou d'une butée 27 placé(e) entre eux, une gaine d'aération étant formée par le cadre, respectivement la butée et la paire composée de l'élément en réseau quadrillé 21 et l'élément capitonné 19, lorsque l'élément en réseau quadrillé fait face à la personne assise, mais l'élément en réseau quadrillé étant appliqué sur l'élément capitonné et soutenant ce dernier, si d'autre part l'élément capitonné fait face à la personne assise.

12. Dispositif selon la revendication 11, **caractérisé en ce que** les paires composées de l'élément en réseau quadrillé 21 et de l'élément capitonné 19 sont vissées sur le cadre, respectivement sur la butée 27 placé(e) entre eux.

13. Dispositif selon l'une quelconque des revendications 1 à 12, **caractérisé en ce que** l'assise et/ou le dossier sont constitués d'un châssis en tubes ou en profilés 37.

14. Dispositif selon la revendication 13, **caractérisé en ce que** les éléments de capitonnage en réseau quadrillé 9/9a, respectivement les éléments en réseau quadrillé 21 et les éléments de capitonnage 19 comportent des tubes enfichables de fixation, respectivement des profilés enfichables de fixation, des fermetures rabattables, des sauterelles de fixation ou des fermetures par serrage situés à l'intérieur 41 et/ou situés à l'extérieur 42.

15. Dispositif selon l'une quelconque des revendications 1 à 14, **caractérisé en ce qu'**on a prévu un réglage du dossier 40 et/ou un appuie-tête.

16. Dispositif siège/couchette climatisé, respectivement ventilé, pour des véhicules ou des meubles selon l'une quelconque des revendications 2 à 10 ou 13 à 15, **caractérisé en ce que** pour la modification prédéfinie des distances entre les réseaux quadrillés et les capitons, on a prévu des rails perforés, coulissants, à enclenchement ou dentés.
